(19) **Europäisches Patentamt**
**European Patent Office**
**Office européen des brevets**

(11) **EP 1 476 768 B1**

(12) **FASCICULE DE BREVET EUROPEEN**

(45) Date de publication et mention
de la délivrance du brevet:
**25.05.2011 Bulletin 2011/21**

(51) Int Cl.:
***G01S 13/00*** *(2006.01)*　　　***G01S 13/524*** *(2006.01)*
***G01S 7/41*** *(2006.01)*

(21) Numéro de dépôt: **02799836.8**

(22) Date de dépôt: **19.12.2002**

(86) Numéro de dépôt international:
**PCT/FR2002/004468**

(87) Numéro de publication internationale:
**WO 2003/056358 (10.07.2003 Gazette 2003/28)**

(54) **REJECTION DE FOUILLIS DANS UN RECEPTEUR RADAR PASSIF DE SIGNAUX OFDM A RESEAU D'ANTENNES**

STÖRECHOBESEITIGUNG IN EINEM PASSIVEN RADAREMPFÄNGER FÜR OFDM SIGNALE MIT EINEM ANTENNENNETZWERK

CLUTTER REJECTION IN A PASSIVE RADAR RECEIVER OF OFDM SIGNALS WITH ANTENNA ARRAY

(84) Etats contractants désignés:
**AT BE BG CH CY CZ DE DK EE ES FI FR GB GR IE IT LI LU MC NL PT SE SI SK TR**

(30) Priorité: **26.12.2001 FR 0116898**

(43) Date de publication de la demande:
**17.11.2004 Bulletin 2004/47**

(73) Titulaire: **ONERA (Office National d'Etudes et de Recherches Aérospatiales) 92320 Châtillon (FR)**

(72) Inventeur: **POULLIN, Dominique F-92320 Chatillon (FR)**

(74) Mandataire: **Lapoux, Roland et al Bloch & Bonnétat 23bis, rue de Turin 75008 Paris (FR)**

(56) Documents cités:
**FR-A- 2 719 382　　FR-A- 2 776 438 FR-A- 2 820 507**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un récepteur radar passif recevant un signal radioélectrique composé de trames de symboles émis chacun sur des porteuses orthogonales codées.

Dans le domaine radar, il est généralement difficile, voire impossible, d'atteindre les performances limites atteignables en terme de détection pour une cible mobile. En effet, ces performances, qui sont fixées par le rapport signal à bruit thermique en sortie d'un filtre adapté dans le récepteur radar, sont généralement limitées, en pratique, non pas par le niveau de bruit thermique mais par le niveau associé au fouillis en sortie du filtre adapté. Le terme fouillis est, ici, à prendre au sens large puisqu'il désigne l'ensemble des trajets à Doppler nul. Par exemple, pour un radar bistatique dont l'émetteur et le récepteur sont distants, le fouillis désigne l'ensemble des trajets suivants : trajet directement issu de l'émetteur ainsi que chaque trajet reçu après réflexion sur un obstacle fixe.

Divers procédés de réjection de ces signaux indésirables sont connus mais présentent des inconvénients non négligeables. Par exemple, les procédés de réjection adaptatifs basés sur l'utilisation d'une matrice de covariance des signaux reçus par un réseau de capteurs présentent les limitations suivantes :

- Ils n'éliminent qu'un nombre limité de signaux d'interférence décorrélés, caractérisés par leur direction. En conséquence, ces procédés ne sont pas optimaux dans le cadre de la lutte contre le fouillis lorsque celui-ci est riche en multitrajets de retards différents.
- Ils entraînent la création d'axes aveugles, liés aux signaux rejetés, suivant lesquels il devient impossible de détecter une cible.
- Ils ne rejettent que des signaux dont le rapport signal à bruit est positif en sortie de compression angulaire. Cette réjection est limitative lorsqu'elle est effectuée en tête de traitement radar, c'est-à-dire avant la compression distance-Doppler.

L'invention est plus particulièrement dirigée vers la réjection de l'ensemble des signaux à effet Doppler nul dans le fouillis capté par un récepteur radar passif de signaux particuliers de type OFDM (Orthogonal Frequency Division Multiplex). Les signaux OFDM sont caractérisés par l'émission simultanée d'un grand nombre de sous-porteuses orthogonales codées à plusieurs états de phase ou d'amplitude, c'est-à-dire par un spectre de raies orthogonales au sens de la transformée de Fourier sur une durée finie T, équidistantes en 1/T.

Selon la demande de brevet FR 2776438, un radar bistatique traite des signaux de radiocommunication numériques au format COFDM (Coded OFDM) dans le cadre de radiodiffusion et de télédiffusion de programmes selon les normes européennes DAB (Digital Audio Broadcasting) et DVB (Digital Video Broadcasting). Ces signaux émis ainsi par des émetteurs d'opportunité pour des applications de récepteur radar passif assurent une utilisation optimale du spectre émis, d'une manière similaire à un bruit blanc, et sont résistants aux multitrajets et interférences.

Selon cette demande de brevet, le récepteur radar comprend plusieurs antennes de réception pour détecter ces signaux. Le traitement radar repose sur la corrélation Doppler-distance des signaux reçus avec une référence temporelle de signal émis. La référence temporelle est obtenue en décodant les signaux enregistrés conformément aux opérations effectuées en radio-télécommunications.

Cependant, étant donnée la nature bistatique du système radar, la puissance du signal de trajet direct est élevée par rapport à celle du signal utile réfléchi par une cible. Le trajet direct devrait être rejeté avant d'effectuer la corrélation Doppler-distance. L'énergie contenue dans les lobes secondaires distance-Doppler du trajet direct est généralement nettement supérieure au niveau de bruit thermique, si bien que des cibles situées à proximité du trajet direct sont difficilement détectables.

La demande de brevet FR 2 820 507 propose un récepteur radar pour signal radioélectrique reçu à travers un canal de propagation et de type OFDM composé de trames de symboles émis chacun sur des porteuses orthogonales codées. Le récepteur radar vise à supprimer la contribution du trajet direct et plus généralement de signaux parasites à effet Doppler nul dans le traitement des signaux reçus avant la corrélation Doppler-distance. Ce récepteur radar comprend un moyen de mise en forme pour mettre le signal reçu sous forme d'un signal numérique de symboles, un moyen de corrélation Doppler-distance pour discriminer des cibles mobiles, et un moyen de filtrage pour éliminer dans le signal de symboles au moins des signaux parasites à effet Doppler nul afin d'appliquer un signal filtré contenant essentiellement des signaux rétrodiffusés par des cibles au moyen de corrélation. Ce récepteur radar peut comprendre plusieurs voies de réception.

Toutefois, si le moyen de filtrage basé sur des matrices inverses de matrices de covariance dépendant chacune de produits des raies spectrales des signaux de symboles relatives à une porteuse respective rejette l'ensemble du fouillis, c'est-à-dire essentiellement les signaux parasites à effet Doppler nul, le récepteur n'assure pas une couverture isotrope de l'espace. Après filtrage, les diagrammes de rayonnement des signaux filtrés correspondant aux voies de réception présentent des secteurs aveugles, c'est-à-dire des "trous" suivant les directions de réception des signaux corrélés à effet Doppler nul d'autant plus prononcés que ces signaux sont de puissance élevée.

Le filtrage adaptatif des raies des signaux reçus OFDM entraîne des pertes de réjection qui peuvent résulter d'une éventuelle corrélation entre le vecteur directionnel lié à une cible mobile et l'un des vecteurs associés aux signaux à effet Doppler nul qui doit être filtré. Des cibles mobiles situées dans la direction aveugle suivant laquelle les signaux parasites à effet Doppler nul sont éliminés, ne peuvent plus être détectées.

L'objectif de la présente invention est de limiter les pertes liées à la colinéarité du vecteur directionnel de trajet direct à éliminer et d'un éventuel vecteur directionnel de cible, c'est-à-dire à la corrélation des signaux de trajet direct et d'éventuels signaux rétrodiffusés par une cible mobile. Après filtrage est obtenu un diagramme de réception légèrement atténué et isotrope dans lequel la contribution des signaux à effets Doppler nul est supprimée.

Pour atteindre cet objectif, un récepteur radar traitant un signal radioélectrique reçu à travers un canal de propagation et composé de trames de symboles émis chacun sur des porteuses orthogonales, comprend des moyens tels que définis dans la revendication 1. Les N-1 signaux fictifs sont analogues à des signaux virtuellement émis suivant les N-1 vecteurs directionnels orthogonaux entre l'émetteur réel des symboles émis et le récepteur radar et retardés entre eux et par rapport au trajet direct réel en fonction des multiples entiers différents de l'inverse de la largeur de bande des porteuses.

Selon l'invention, des signaux fictifs provenant de plusieurs émetteurs OFDM fictifs suivant des directions différentes et des distances différentes par rapport au récepteur radar sont additionnés aux signaux réellement captés par les antennes pour produire des signaux reçus modifiés qui sont représentatifs d'un canal de propagation "composite". Le canal composite est caractérisé par un vecteur de propagation qui, en moyenne dans la bande des porteuses OFDM, est quasiment orthogonal à tous les vecteurs directionnels possibles de trajet direct et trajets multiples de type espace libre. Le diagramme de rayonnement après filtrage est quasiment isotrope, les secteurs aveugles ou trous dûs à l'élimination des signaux à effet Doppler n'étant plus présents. Des cibles mobiles peuvent alors être détectées suivant le vecteur directionnel de trajet direct réel.

Selon une réalisation préférée basée sur un traitement des signaux numériques de symboles reçus après une transformation de Fourier de ceux-ci en des groupes de raies spectrales correspondant aux porteuses orthogonales, le moyen pour estimer est apte à estimer le vecteur directionnel du trajet direct à N composantes en fonction de matrices de covariance d'ordre N dépendant chacune de produits de raies spectrales des signaux de symboles reçus deux à deux dans un groupe relatif à une porteuse respective.

Afin de produire les raies spectrales du signal de référence, le récepteur radar peut comprendre un moyen pour estimer les coefficients de la fonction de transfert du canal de propagation en fonction des raies spectrales de l'un des signaux de symboles reçus pour chaque symbole et moyenner les coefficients de la fonction de transfert sur chaque trame. En variante peut être ajouté un moyen pour corriger les raies spectrales du signal de référence en fonction de la direction d'une cible par rapport au vecteur directionnel de trajet direct estimé. Il est ensuite prévu un moyen pour estimer une réplique de signal émis en fonction des raies spectrales du signal de référence, la réplique estimée étant corrélée aux signaux de symboles filtrés dans le moyen de corrélation Doppler-distance.

D'une manière analogue au récepteur radar selon la demande de brevet précitée FR 2 820 507 , le moyen de filtrage comprend un moyen pour estimer des matrices de covariance d'ordre N dépendant chacune de produits des raies spectrales des signaux reçus modifiés deux à deux dans un groupe relatif à une porteuse respective, un moyen pour déduire des matrices inverses des matrices de covariance, et un moyen pour filtrer les groupes de raies spectrales relatifs respectivement aux porteuses dans les signaux reçus modifiés en multipliant les groupes de raies par les matrices inverses respectives afin de produire des groupes filtrés de raies spectrales. A la suite des moyens de filtrage, le récepteur radar comprend alors un moyen pour synthétiser les groupes filtrés de raies spectrales en des signaux de symboles filtrés contenant essentiellement des signaux rétrodiffusés par des cibles appliqués au moyen de corrélation. Cette réalisation élimine également des signaux brouilleurs autres que des signaux corrélés codés de type COFDM.

Afin de mieux caractériser la fonction de transfert du canal de propagation, les produits de raies spectrales dont dépendent les matrices de covariances dépendent de raies spectrales de symboles et sont moyennés sur chaque trame.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un diagramme temporel de symboles successifs dans un signal COFDM émis ;
- la figure 2 est un diagramme temporel d'une trame de signal COFDM ;
- la figure 3 est un diagramme de trajets direct, multiples et réfléchi par une cible mobile entre un émetteur et un récepteur ;
- la figure 4 montre un exemple de sorties des différents contributeurs (trajet direct, multitrajets, cible, bruit) en sortie de corrélateur ;
- la figure 5 est un bloc-diagramme schématique d'un récepteur radar à réseau d'antennes selon la demande de brevet FR 2 820 507 ;
- la figure 6 est un diagramme de rayonnement du réseau d'antennes du récepteur radar selon la figure 5 ;

- la figure 7 est un bloc-diagramme schématique notamment d'un circuit de modification de canal de propagation selon l'invention, améliorant le récepteur radar à plusieurs antennes selon la figure 5 ; et
- les figures 8 et 9 sont des diagrammes montrant respectivement la superposition de signaux émis par N-1 émetteurs fictifs pour une fréquence donnée, et la superposition des N-1 signaux fictifs émis pour obtenir des pertes isotropes selon l'invention.

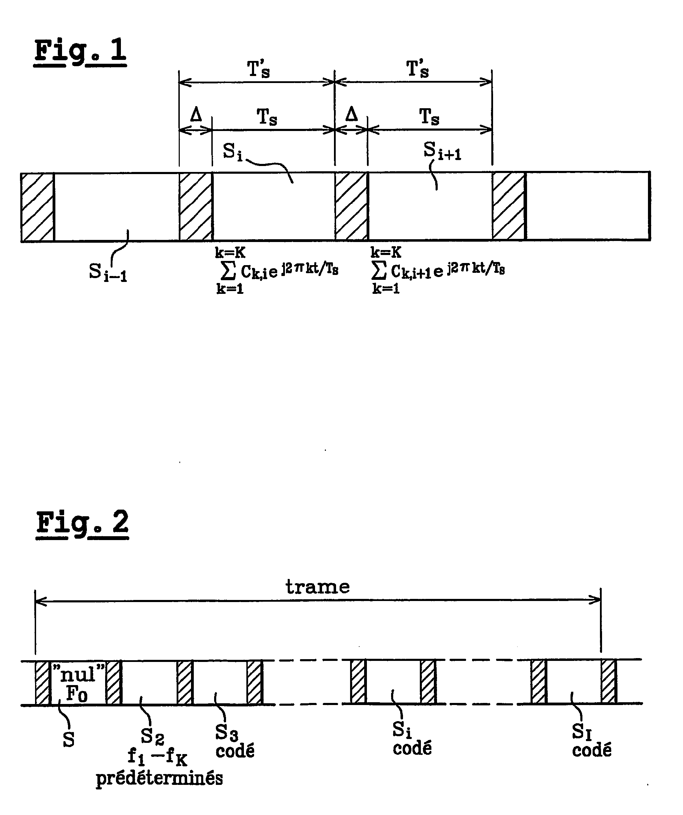

Les caractéristiques principales de signaux COFDM en radiocommunications sont rappelées ci-après, en référence à la figure 1.

Ces signaux en bande de base sont émis par période de symbole $T'_S$. Un message contenu dans chacun de ces symboles émis est porté par un nombre important de sinusoïdes émises simultanément. Ces sinusoïdes constituent des sous-porteuses, appelées ci-après "porteuses" par souci de simplification, et sont codées en phase ou en amplitude. Les fréquences de porteuses $f_1$ à $f_K$ sont équidistantes de $1/T_S$. Chaque symbole émis $S_i$ résulte de la somme suivante de porteuses pendant la durée $T'_S$ ($T'_S > T_S$) :

$$S_i = \sum_{k=1}^{k=K} C_{k,i}\, e^{2j\pi kt/T_S}$$

où j désigne l'imaginaire pur racine de -1 ($j^2 = -1$), et t la variable temps.

Les porteuses aux fréquences $f_k = k/T_S$ avec $1 \leq k \leq K$ sont donc orthogonales sur la durée $T_S$. $\Delta = T'_S - T_S$ désigne l'intervalle de garde.

Sur une période d'analyse $T_S$, les signaux COFDM constituent ainsi un signal de bande $K/T_S$ composé d'un spectre de K raies équidistantes du pas de fréquence $1/T_S$ et chacune de largeur $1/T_S$. Les porteuses sont modulées individuellement à l'aide, par exemple, d'un code à quatre états de phase exprimés par les coefficients complexes $C_{k,i}$ appartenant à l'alphabet (1+j, 1-j, -1+j, -1-j).

En pratique, un message de données peut n'occuper que quelques fréquences $f_k$ sur quelques périodes de symbole $T'_S$ dans le multiplex temporel et fréquentiel de K fréquences et de I intervalles de temps.

A l'émission, les symboles sont organisés en trame. Chaque trame montrée à la figure 2 comprend I symboles $S_1$ à SI. Le premier symbole $S_1$ de la trame est un symbole "nul" ne portant aucune information et est constitué de la fréquence porteuse de modulation $F_0$ du signal émis. Le symbole $S_1$ sert de synchronisation de trame, c'est-à-dire de référence temporelle. Le deuxième symbole $S_2$ de la trame sert notamment à l'apprentissage du canal de propagation dans le récepteur radar et contient les K porteuses ou sinusoïdes prises aux fréquences $f_1$ à $f_K$ ayant des phases prédéterminées dans l'émetteur. Ces K porteuses dans le symbole $S_1$ sont utilisées dans le récepteur radar, pour estimer le signal émis, chaque porteuse $f_k$ servant de référence en fréquence et phase. Grâce aux deux premiers symboles peuvent être ainsi acquis au moins les paramètres d'émission $F_0$, $T_S$ et $f_1$ à $f_K$. Les autres symboles $S_3$ à $S_I$ sont destinés à supporter un ou plusieurs messages de données occupant partiellement ou non chaque symbole.

A la réception, en radiocommunications, les symboles sont récupérés à l'aide d'une analyse fréquentielle des signaux COFDM reçus sur la durée $T_S$. Les fréquences émises étant orthogonales au sens d'une transformée de Fourier FFT, chacune des porteuses est démodulée afin de restituer l'information.

En pratique, l'orthogonalité des fréquences émises est dégradée par les interférences suivantes :

- interférences intersymbole intraporteuse :

  superposition de signaux codés différemment ou durée d'analyse $T_S$ non adaptée au code ;

- interférences intersymbole interporteuse :

  signaux non orthogonaux sur la durée d'analyse $T_S$ ;

- interférences intrasymbole intraporteuse :

  superposition de signaux codés différemment ;

- interférences intrasymbole interporteuse :

  signaux non stationnaires.

Ces interférences sont liées aux trajets multiples dans le canal de propagation entre l'émetteur et le récepteur. L'adjonction de l'intervalle de garde $\Delta$ à chaque période de symbole $T'_S$ permet de s'affranchir de toutes les interférences, lorsque l'intervalle de garde $\Delta$ est supérieur à l'étalement temporel du canal de propagation dû aux trajets multiples : : il existe alors pour chaque durée $T'_S$ une plage de longueur $T_S$ dans laquelle tous les signaux reçus issus des multitrajets sont codés de façon identique.

Le traitement des signaux reçus comprenant une corrélation Doppler-distance, la fonction d'ambiguïté des signaux COFDM et notamment ses lobes secondaires doivent être étudiés. Les lobes secondaires de la fonction d'ambiguïté associée à la forme d'onde COFDM sont relativement uniformes dans le plan distance-Doppler, et leur niveau par rapport au lobe principal est de $-10.\log_{10}(I.K)$. Les lobes secondaires sont moins élevés au pied du pic principal. L'étude classique du bilan radar montre qu'en général l'énergie contenue dans les lobes secondaires associés au trajet direct est prépondérante vis-à-vis du bruit thermique.

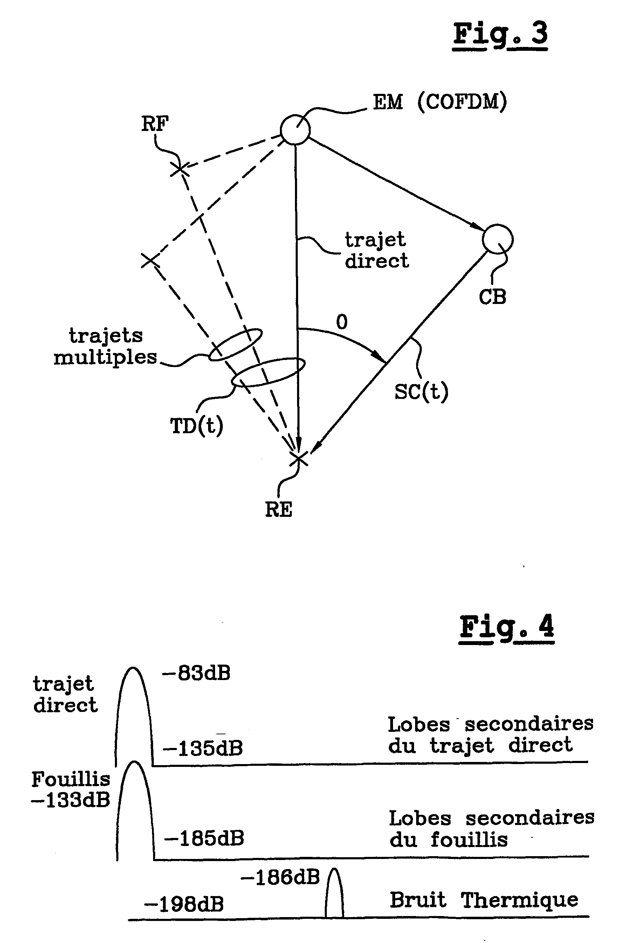

A titre d'exemple, on considère un radar bistatique montré à la figure 3 avec un émetteur EM de puissance électromagnétique rayonnée $P_eG_e$ = 1000 W, un gain d'antenne de récepteur RE, $G_r$ = 10 dB, une longueur d'onde $\lambda$ = 1 m correspondant à la fréquence $F_0$ = 300 MHz, une distance émetteur-récepteur d = 40 km, des distances émetteur-cible EM-CB et distances cible-récepteur CB-RE égales à 40 km, un facteur de bruit F = 6 dB, une surface équivalente radar SER = 0 dB, I = 100 symboles de durée $T_S$ = 1 ms et un intervalle de garde de 250 $\mu$s pour une durée de trame de 125 ms, et K = 1500 porteuses pour une largeur de bande de B = 1,5 MHz.

Le bilan de liaison entre l'émetteur EM et le récepteur RE est montré à la figure 4.

L'énergie contenue dans les lobes secondaires attachés au trajet direct et au fouillis (clutter) dû aux trajets multiples est prépondérante par rapport au bruit thermique. Le niveau d'énergie des lobes du trajet direct se trouve à 186-135 = 51 dB au-dessus du niveau présumé de la cible qui présente un rapport signal à bruit thermique de 198-186 = 12 dB. Le récepteur radar passif de l'invention rejette efficacement le trajet direct et le fouillis ainsi que les brouilleurs, tels que des signaux d'interférence, dans un signal reçu à large bande avant la corrélation Doppler-distance afin de détecter des cibles mobiles.

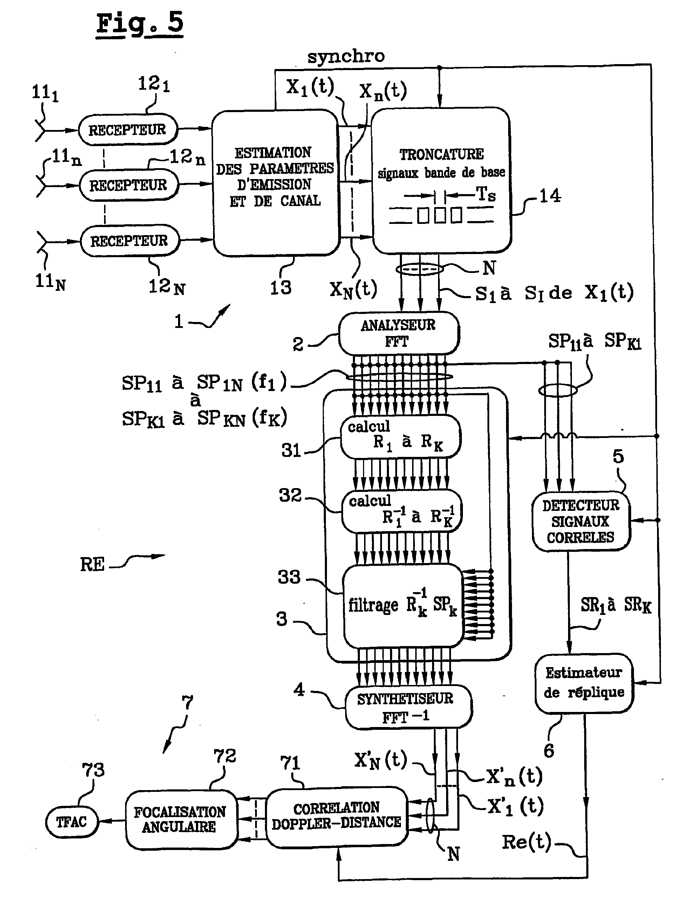

En référence à la figure 5, un récepteur radar passif RE à réseau d'antennes pour signaux OFDM, selon la demande de brevet FR 2 820 507 , comprend un circuit de mise en forme de signal reçu 1, un analyseur de Fourier 2, un circuit de filtrage de signaux corrélés 3, un synthétiseur de Fourier 4, un détecteur de signaux corrélés 5, un estimateur de réplique de signal émis 6 et un circuit de détermination de cibles 7.

Le circuit de mise en forme de signal reçu 1 comprend classiquement en entrée un réseau de N antennes de réception $11_1$ à $11_N$ reliées respectivement à plusieurs étages de réception $12_1$ à $12_N$ pour recevoir des signaux de radiodiffusion et télédiffusion COFDM, avec N ≥ 2. Le récepteur radar RE est ainsi structuré en N voies de réception parallèles dans et entre les circuits 1 à 4 et 7 respectivement associées aux antennes $11_1$ à $11_N$.

Après transposition en fréquence, chaque étage de réception $12_n$ avec $1 \leq n \leq N$, convertit numériquement le signal radioélectrique reçu respectif $X_n(t)$ en bande de base et l'applique à un circuit d'estimation de paramètres d'émission et de canal 13:

$$X_n(t) = TD_n(t) + SC_n(t) + B_n(t),$$

où pour chaque symbole émis $\sum_{k=1}^{k=K} C_k \ e^{2j\pi kt/T_S}$, en faisant abstraction de l'indice i du symbole $S_i$ :

$$- TD_n(t) = \sum_{k=1}^{k=K} H_{kn} \ C_k \ e^{j2\pi kt/T_S}$$

désigne un signal OFDM reçu provenant à la fois d'au moins un émetteur EM ou éventuellement de plusieurs émetteurs OFDM selon des trajets directs et des trajets multiples dûs à des réflecteurs fixes RF et correspondant au fouillis (clutter), comme illustré à la figure 3 ; $H_{kn}$ désigne un coefficient complexe correspondant à la fonction de transfert du canal de propagation EM-11$_n$ relativement à ces trajets pour la raie $f_k$ ; le signal $TD_n(t)$ est constitué par la superposition de signaux parasites à effet Doppler nul dûs aux trajets directs et multiples ; ces signaux parasites sont appelés "signaux corrélés" ;

$$- SC_n(t) = \sum_{k=1}^{k=K} h_c \, C_k \, e^{j2\pi k(t-\tau_n)/T_S} \, e^{-j2\pi vt}$$

désigne un signal reçu OFDM issu de la rétrodiffusion de signaux émis OFDM par au moins une cible mobile CB et donc affectés d'un effet Doppler non nul ; il constitue le signal utile à extraire dont la puissance est très faible comparativement à celle des signaux corrélés $TD_n(t)$ ; $h_c$ est la fonction de transfert à bande étroite de la cible CB, $\tau_n$ dénote la différence de marche entre le trajet direct et le trajet réfléchi par la cible, et $v$ est la fréquence Doppler de la cible ;
- $B_n(t)$ désigne des signaux reçus dans la bande passante utile, appelés brouilleurs, autres que lés signaux OFDM corrélés, tels que des signaux d'interférence et de bruit thermique.

Le circuit 13 estime les paramètres du signal émis, tels que la fréquence de porteuse $F_0$ et la durée de symbole $T_S$ en fonction d'une analyse des deux premiers symboles $S_1$ et $S_2$ d'une trame (figure 2) dans les N signaux reçus afin de constituer une référence temporelle. Connaissant la période $T'_S$ du signal émis et la durée $T_S$ de chaque symbole, la longueur temporelle du canal est déduite du processus de synchronisation de la référence temporelle précédente, en analysant les signaux reçus à l'intérieur de chaque intervalle de garde $\Delta$ qui est supérieur à la longueur temporelle de canal. Puis, les signaux reçus $X_1(t)$ à $X_N(t)$ sont tronqués périodiquement dans un circuit de troncature 14. La partie stationnaire des symboles reçus de durée $T_S$ est récupérée en retirant la portion des signaux reçus dans l'intervalle de garde $\Delta$ de chaque période $T'_S$ et particulièrement en retirant la longueur de canal déduite dans chaque période.

Chaque partie de durée $T_S$ dans chacun des N signaux reçus numériques en bande de base $X_1(t)$ à $X_N(t)$ est ensuite appliquée à l'analyseur de Fourier 2. L'analyseur produit les composantes réelle et imaginaire de chaque signal $X_n(t)$ à chaque durée $T_S$ par transformée de Hilbert et les analyse par transformée de Fourier rapide FFT pour fournir le spectre fréquentiel de chaque symbole $S_i$ délivré par le circuit de troncature 14. L'analyseur 2 produit K raies spectrales $SP_{1n}$ à $SP_{Kn}$ pour chaque symbole du signal reçu $X_n(t)$ relatives aux fréquences $f_1$ à $f_K$ et les applique en parallèle à un module de calcul de matrices de covariance 31 dans le circuit de filtrage 3. L'information portée par chaque raie spectrale $SP_k$ relative à une fréquence $f_k = k/T_S$ émise indépendamment des autres fréquences est liée d'une part au codage de la raie spectrale correspondante et d'autre part à la fonction de transfert $H_k$ du canal de propagation.

Le circuit de filtrage 3 comprend trois modules logiciels : le module 31, un module de calcul de matrices de covariance inverses 32 et un module de filtrage 33.

Pour chaque raie $SP_k$ à la fréquence $f_k$, délivrée par l'analyseur 2, le module 31 estime une matrice de covariance $R_k$ de dimensions NxN dans laquelle une ligne de rang donné n est composée des produits de la raie spectrale $SP_{kn}$ reçue relative à une antenne donnée 11$_n$ par les conjugués des raies spectrales reçues $SP_{k1}$ à $SP_{kN}$ reçues relatives aux N antennes 11$_1$ à 11$_N$, les produits étant moyennés pour des symboles pendant une durée prédéterminée, avec $1 \le n \le N$. De préférence, la durée prédéterminée pour moyenner lesdits produits est nettement plus longue que la durée de symbole $T_S$, et est typiquement la durée d'une trame, soit des produits moyennés sur I-1 symboles $S_2$ à $S_I$. Le moyennage desdits produits sur un grand nombre de symboles, c'est-à-dire sur une centaine de symboles composant la trame, décorrèle le signal de cible des signaux parasites reçus avec un niveau élevé par les antennes. L'orthogonalité des raies spectrales entre elles permet de rendre les matrices de covariance $R_1$ à $R_K$ indépendantes du codage.

Puis le module 32 déduit les matrices inverses $R_1^{-1}$ à $R_K^{-1}$ des K matrices de covariance et les mémorise. Ces K matrices inverses de dimensions NxN font office de K filtres dans le module 33 respectivement pour filtrer K groupes chacun ayant N raies spectrales $SP_{11}$ - $SP_{1N}$ à $SP_{K1}$ - $SP_{KN}$ délivrées par l'analyseur 2. Chaque groupe de N raies spectrales reçues $SP_{k1}$ à $SP_{kN}$ pour une fréquence donnée $f_k$ est ainsi filtré par un filtre qui à chaque symbole fournit le produit du vecteur colonne composé des N raies spectrales reçues $SP_{k1}$ - $SP_{kN}$ pour ce symbole et la fréquence $f_k$ par la matrice inverse $R_k^{-1}$. Dans les N groupes à K raies spectrales filtrées, fournis chacun par le circuit de filtrage 3, a été éliminée la contribution des signaux corrélés à effet Doppler nul dûs au trajet direct et aux trajets multiples, ainsi que les brouilleurs. Les NK raies spectrales filtrées sont ensuite synthétisées par transformée de Fourier rapide inverse

FFT$^{-1}$ dans le synthétiseur 4 qui délivre N signaux temporels de symboles $X'_1(t)$ à $X'_N(t)$ comprenant respectivement les signaux de rétrodiffusion de cible $SC_1(t)$ à $SC_N(t)$ au circuit de discrimination de cibles 7.

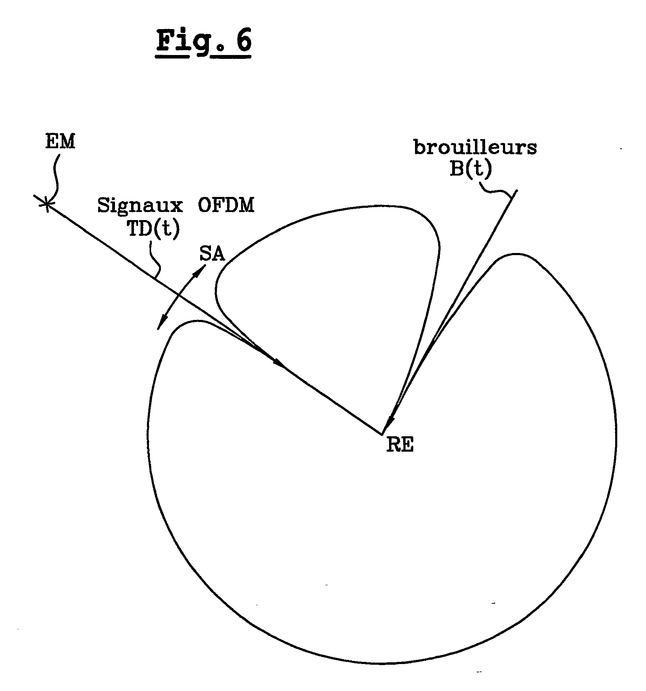

Le diagramme de rayonnement des signaux $X'_1(t)$ à $X'_N(t)$ présente des axes aveugles, c'est-à-dire des "trous" suivant les directions de réception des signaux corrélés OFDM $TD_1(t)$ à $TD_N(t)$ et des brouilleurs $B_1(t)$ à $B_N(t)$, comme montré à la figure 6.

Pendant une phase d'apprentissage récurrente à chaque trame de symboles, le détecteur 5 déduit des K raies spectrales de chaque symbole de la trame délivrées par l'analyseur de spectre 2 et relatives à l'un des signaux reçus mis en forme, par exemple des raies $SP_{11}$ à $SP_{K1}$ du signal reçu $X_1(t)$ via la première antenne $11_1$, les raies spectrales $SR_1$ à $SR_K$ d'un signal de référence $SR(t)$ tel que :

$$SR(t) = \sum_{k=1}^{k=K} \overline{H}_{k1}\, C_k\, e^{j2\pi kt/T}S + b_1(t).$$

$\overline{H}_k$ est la moyenne des I-1 coefficients de la fonction de transfert de canal de propagation pour la raie $SP_{k1}$ pendant les symboles $S_2$ à $S_I$ de la trame reçue par l'antenne $11_1$ soit quasiment $|\overline{H}_{k1}| = |H_{k1}|$, ce qui améliore l'estimation de la fonction de transfert du canal, en la rendant moins dépendante de variations d'amplitude et de phase instantanées. Ce moyennage permet de négliger le signal rétrodiffusé de cible $SC_1(t)$ et donc de caractériser le canal de propagation et les signaux corrélés. Le signal de bruit $b_1(t)$ désigne une moyenne de brouilleurs reçus pendant la trame, composés essentiellement d'un bruit thermique de variance inférieure à celle des brouilleurs $B_1(t)$.

Après avoir estimé et mémorisé les coefficients de fonction de transfert $\overline{H}_{11}$ à $\overline{H}_{K1}$ moyennés pendant une trame, le détecteur 5 applique les raies spectrales des signaux corrélés à effet Doppler nul moyennées sur une trame, c'est-à-dire les raies moyennées $SR_1$ à $SR_K$ du signal $SR(t)$ dépendant des coefficients $\overline{H}_{11}$ à $\overline{H}_{K1}$ à K entrées de l'estimateur 6. L'estimateur 6 produit une réplique de signal émis à "bande étroite" $Re(t)$ appliqués à N corrélateurs Doppler-distance 71 dans le circuit de discrimination de cibles 7 :

$$Re(t) = \sum_{k=1}^{k=K} C_k\, e^{j2\pi kt/T}S.$$

De manière analogue à une voie Doppler du récepteur radar selon la demande de brevet français FR 2776438, le circuit de discrimination de cibles 7 comprend N corrélateurs Doppler-distance $71_1$ à $71_N$ et N circuits de focalisation angulaire $72_1$ à $72_N$. Des voies Doppler dans chaque corrélateur $71_n$ sont affectées d'un écart de fréquence prédéterminé les unes par rapport aux autres dû à l'effet Doppler. Les voies Doppler constituent plusieurs cases vitesse du signal filtré respectif $X'_n(t)$ par des changements de fréquence et sont corrélées chacune, pour chaque porteuse $f_1$ à $f_K$, à la réplique de signal émis $Re(\tau)$ afin de déterminer des pics de corrélation qui sont dans des cases distance correspondant à des cibles mobiles. Après sommation, le circuit de focalisation angulaire respectif $72_n$ détermine des cases angulaires positionnant des cibles mobiles. Enfin, un circuit de Traitement de Fausse Alarme Constante (TFAC) 73 extrait des "plots" relatifs à des données de positionnement et vitesse sur des cibles mobiles recherchées.

En variante, le circuit de filtrage 3 est du type de celui montré à la figure 5 de la demande de brevet FR 2 820 507. Le circuit 3 comporte N soustracteurs pour soustraire chacune les K raies moyennées du signal de référence $SR(t)$ correspondant aux coefficients moyennés de fonction de transfert de canal de propagation $\overline{H}_{11}$ à $\overline{H}_{K1}$ et produites par le détecteur 3, aux K raies spectrales du signal reçu respectif $X_n(t)$ afin de produire via le synthétiseur 4 autant de signaux filtrés $X'_1(t)$ à $X'_N(t)$ que d'antennes pour être traités en parallèle dans des voies Doppler du circuit 7.

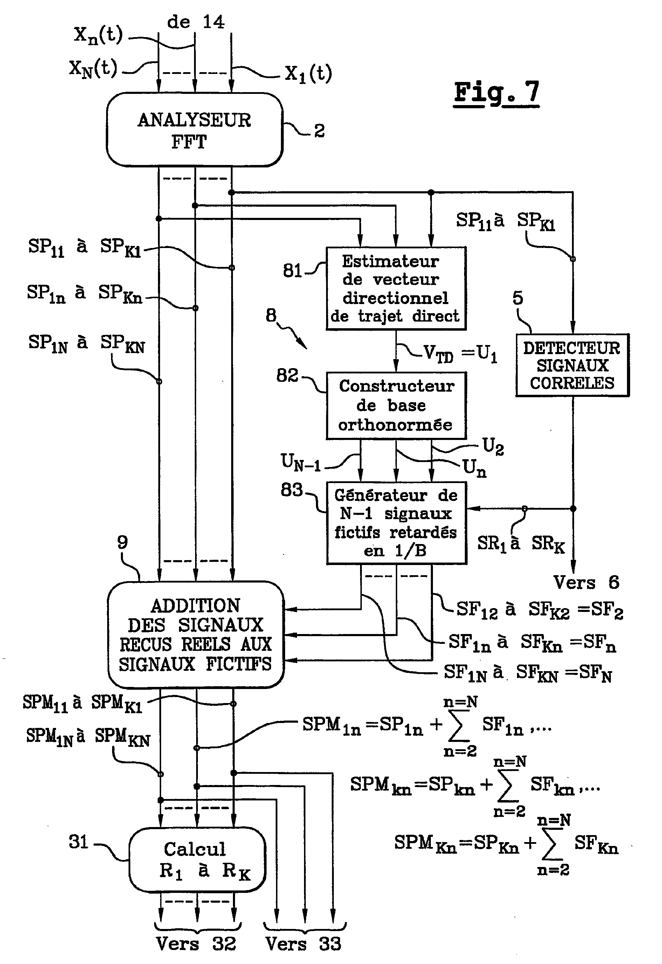

En référence maintenant à la figure 7, l'invention ajoute essentiellement un circuit de modification de canal de propagation 8 pour supprimer le secteur angulaire aveugle SA dans les diagrammes tels que celui montré à la figure 6, résultant de la réjection des signaux corrélés à effet Doppler nul dûs au trajet direct et aux trajets multiples. Le circuit 8 est interconnecté entre les KN sorties de l'analyseur de spectre 2 et KN premières entrées d'un circuit d'addition 9 qui reçoit par KN deuxièmes entrées les raies spectrales $SP_{11}$ à $SP_{KN}$ délivrées par l'analyseur 2. La réjection du signal de trajet direct basée sur du filtrage adaptatif implique des pertes liées à la corrélation ou sensible colinéarité entre un vecteur directionnel relatif à une cible mobile et le vecteur directionnel de trajet direct réel. Notamment, lorsque le trajet direct est de type espace libre, sa réjection selon le principe de filtrage adaptatif angulaire engendre classiquement le phénomène de secteur angulaire aveugle SA. Le circuit 8 a pour rôle précisément de modifier le vecteur directionnel de trajet direct de sorte que le trajet direct soit rejeté sans que le secteur angulaire aveugle SA soit engendré en limitant les pertes liées à la corrélation du vecteur de cible et du vecteur de trajet direct. L'invention modifie alors la colinéarité des vecteurs directionnels cible et trajet direct grâce à la connaissance du signal de référence SR(t) produit par le détecteur 5 et représentatif principalement du signal de trajet direct, afin de rejeter ensuite le vecteur directionnel de trajet direct modifié qui n'est plus colinéaire au vecteur directionnel de cible.

Toutefois, la suppression d'un secteur aveugle suivant l'axe du trajet direct reçu pourrait engendrer un autre secteur aveugle suivant l'axe modifié du trajet direct. L'invention pallie également cet inconvénient en moyennant les pertes dues à la modification du vecteur de trajet direct afin que l'espace soit observé avec une couverture quasi-isotrope dans le circuit de détermination de cibles 7.

Le circuit de modification 8 comprend essentiellement en cascade trois modules logiciels : un estimateur de vecteur directionnel de trajet direct 81, un constructeur de base orthonormée 82 et un générateur de signaux fictifs 83. L'estimateur 81 traite les KN raies spectrales $SP_{11}$ à $SP_{KN}$ fournies par l'analyseur de spectre 2 et les partage en K groupes ($SP_{11}$ à $SP_{1N}$) à ($SP_{K1}$ à $SP_{KN}$) respectivement liés aux K raies émises de porteuses $f_1$ à $f_K$ pour déterminer K matrices de covariance $R_1$ à $R_K$ d'ordre N. Comme dans le module de calcul 31 dans le circuit de filtrage 3, une ligne de rang donnée n est composée des corrélations de la raie spectrale $SP_{kN}$ relative à l'antenne $11_n$ par les conjugués des raies spectrales $SP_{k1}$ à $SP_{kN}$ relatives aux N antennes $11_1$ à $11_N$ et à la porteuse $f_k$ en bande étroite, et les produits de raies spectrales deux à deux sont moyennés pendant une durée prédéterminée supérieure à la durée de symbole $T_S$, telle que la durée d'une trame.

Puis l'estimateur 81 calcule les déterminants des K matrices carrées de covariance $R_1$ à $R_K$ afin d'en déduire pour chaque matrice $R_k$ les N vecteurs propres $V_{k1}$ à $V_{kN}$ à N composantes et les valeurs propres associées $\lambda_{k1}$ à $\lambda_{kN}$. L'estimateur 81 déduit le vecteur propre $V_{kmax}$ qui est associé à la plus élevée $\lambda_{kmax}$ des valeurs propres :

$$\lambda_{kmax} = \sup\ (\lambda_{k1}\ \text{à}\ \lambda_{kN})$$

et qui correspond au vecteur directionnel du trajet direct. En effet, les N-1 autres valeurs propres sont a priori associées à du bruit.

Finalement, l'estimateur 81 moyenne les K vecteurs propres $V_{1max}$ à $V_{Kmax}$ associés aux plus élevées valeurs propres, en un vecteur directionnel de trajet direct $V_{TD}$ à N composantes :

$$V_{TD} = (\sum_{k=1}^{k=K} V_{kmax})/K.$$

Le constructeur 82 construit une base orthonormée de N vecteurs orthogonaux $U_1$ à UN deux à deux et dont le premier $U_1$ est le vecteur directionnel de trajet direct $V_{TD}$. Cette base de vecteurs est quelconque, c'est-à-dire indépendante de la position angulaire du réseau d'antennes de réception $11_1$ à $11_N$ par rapport à la direction du vecteur de trajet direct réel.

Par exemple au moyen d'un algorithme itératif d'orthonormalisation de Schmidt, un deuxième vecteur $U_2$ orthogonal au vecteur $V_{TD}$ est créé, puis un troisième vecteur $U_3$ orthogonal aux deux premiers $U_1 = V_{TD}$ et $U_2$ et ainsi de suite jusqu'à un vecteur UN orthogonal au vecteur $V_{TD}$ et aux N-2 vecteurs créés précédemment. Les N vecteurs $U_1$ à UN de la base ont chacun un module égal à celui $\|V_{TD}\|$ du vecteur de trajet direct et N composantes dans le "repère initial d'antennes" défini par les N composantes du vecteur de trajet direct $U_1 = V_{TD}$.

En variante, le constructeur 82 construit la base orthonormée selon d'autres méthodes connues fondées sur l'utilisation de projecteur orthogonal, ou une paramétrisation de la fonction du réseau d'antennes.

Pour "désensibiliser" le vecteur directionnel $V_{TD}$ "aveugle" associé au trajet direct réel, le générateur 83 génère N-1 signaux fictifs "totalement" corrélés provenant de l'espace orthogonal au vecteur de trajet direct "aveugle" et les applique au circuit d'addition 9. Cette modification du canal de propagation de trajet direct réel se traduit par le traitement d'un signal de réception composite déterminé par un vecteur directionnel dont une partie est orthogonale au vecteur de trajet direct réel. Le générateur 83 participe à cette désensibilisation pour chacune des raies émises $f_1$ à $f_K$ afin d'optimiser les pertes en moyenne et traiter le signal composite avec une couverture isotrope de l'espace dans les circuits 3 et 7 suivant le circuit d'addition 9.

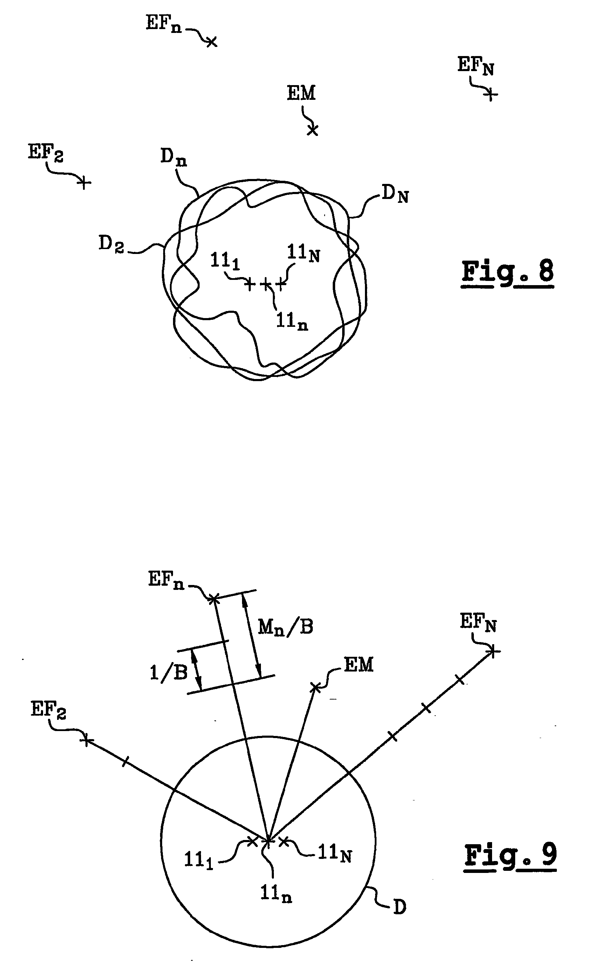

Le générateur 83 génère N-1 signaux fictifs d'émission $SF_2$ à $SF_N$ qui sont proportionnels au signal de référence émis $SR(t)$ dont les K raies spectrales $SR_1$ à $SR_K$ correspondant aux fréquences $f_1$ à $f_K$ sont fournies par le détecteur de signaux corrélés 5. Comme schématisé par des diagrammes de rayonnement $D_2$ à $D_N$ à une fréquence donnée $f_k$ à la figure 8, chaque signal fictif $SF_n$ étalé sur la bande de fréquence utile $B = [f_1, f_N]$ du signal émis réel, avec $2 \leq n \leq N$ semble provenir d'un émetteur fictif $EF_n$, dont la direction par rapport au réseau d'antennes de réception $11_1$ à $11_N$ est celle du vecteur respectif Un de la base orthonormée fournie par le constructeur 82 au générateur 83.

Dans le générateur 83 est prédéterminé par programmation le retard $\tau_n$ entre les trajets directs depuis l'émetteur fictif respectif $EF_n$ et depuis l'émetteur réel EM jusqu'à l'antenne respective $11_n$. Chaque retard $\tau_n$ avec $2 \leq n \leq N$ est un multiple entier $M_n$ de l'inverse 1/B de la largeur de bande $B = [f_1, f_K]$ du signal émis, et les multiples entiers $M_2$ à $M_N$ sont différents entre eux. L'ensemble des signaux fictifs $SF_2$ à $SF_N$ crée ainsi avec chaque signal reçu respectif $X_n(t)$ un canal composite de période fréquentielle égale à la bande B des signaux reçus par le réseau d'antennes. Les retards $\tau_2$ à $\tau_n$ différents par exemple d'un pas égal à 1/B selon l'ordre croissant de l'indice n de 2 à N, mais peuvent être différents entre eux selon une toute autre répartition régulière ou irrégulière.

Les raies $SF_{1n}$ à $SF_{Kn}$ de chaque signal fictif $SF_n$ avec $2 \leq n \leq N$ sont déduites des produits des raies $SR_1$ à $SR_K$ du signal de référence par un coefficient angulaire respectif dépendant de la direction du vecteur respectif Un de la base orthonormée et d'un coefficient de retard respectif dépendant du retard respectif $M_n/B$ avec $M_n$ différent de $M_2$ à $M_{n-1}$ et $M_{n+1}$ à $M_N$.

Les K raies spectrales de tous les signaux fictifs $SF_2$ à $SF_N$ sont additionnées respectivement aux K raies spectrales $SP_{1n}$ à $SP_{Kn}$ de chaque signal $X_n(t)$ reçu réellement par l'antenne respective $11_n$ dans le circuit d'addition 9. En d'autres termes, la raie $SPP_{kn}$ du signal reçu $X_n(t)$ correspondant à la fréquence $f_k$ est additionnée à toutes les raies $SF_{k2}$ à $SF_{kN}$ des N-1 signaux fictifs SF2 à $SF_N$ dans le circuit d'addition 9 résultant pour produire une raie $SPM_{kn}$ d'un signal somme résultant représentatif d'un signal reçu modifié $XM_n$. Le circuit 9 applique les raies respectives des N signaux modifiés $XM_1$ à $XM_N$ au module de calcul 31 dans le circuit de filtrage 3, qui les traite de la même manière que les raies spectrales des signaux respectifs $X_1(t)$ à $X_N(t)$ selon la réalisation montrée à la figure 5. Le canal composite créé par superposition des signaux reçus et des signaux fictifs $SF_2$ à $SF_N$ est alors rejeté en mode à multiples bandes étroites par le circuit de filtrage 3, mais en engendrant des pertes après la réjection du canal composite qui sont isotropes, comme montré schématiquement par le diagramme de rayonnement global D à la figure 9 comparativement à celui de la figure 6. On montre que le rapport signal à bruit plus interférences après réjection présente des valeurs minimale et maximale égales et par suite, les pertes sont isotropes et faibles et valent $10 \log[(N-1)/N]$ dB.

Le signal de référence d'émission $SR(t)$ est ainsi utilisé pour reconstituer fictivement une source à plusieurs émetteurs fictifs. Le signal $SR(t)$ pondéré par les coefficients angulaires respectifs dépendant des vecteurs $U_2$ à UN de la base orthonormée dans le générateur 83 est ajouté à chacun des signaux $X_1(t)$ à $X_N(t)$ reçu par les antennes $11_1$ à $11_N$ dans le circuit d'addition 9. Les signaux fictifs $SF_2$ à $SF_N$ reconstituent un canal de propagation spécifique dont le vecteur de propagation est en moyenne sur la bande de fréquence $f_1$ à $f_K$ du signal émis, orthogonal par construction à tous les vecteurs directionnels de type espace libre envisageables. Dans cette bande de fréquence, la corrélation moyenne des signaux fictifs tels que définis ci-dessus est égale à 1/N, quel que soit le trajet de cible de type espace, ce qui implique des pertes maximales de 3 dB avec un minimum d'antennes de N=2. La couverture après filtrage est ainsi "lissée" et devient isotrope.

En variante, le détecteur 5 corrige l'estimation des raies spectrales $SR_1$ à $SR_K$ du signal de référence SR en fonction de la direction supposée de la cible par rapport au vecteur directionnel de trajet direct $V_{TD}$ fourni par l'estimateur 81. Cette variante permet d'anticiper les pertes suivant la direction de la cible qui pourraient résulter d'une décorrélation du signal de référence avec le signal de cible après le filtrage effectué.

**Revendications**

1. Récepteur radar traitant un signal radioélectrique reçu à travers un canal de propagation (EM-RE) et composé de trames de symboles émis chacun sur des porteuses orthogonales codées ($f1 - f_K$), comprenant N moyens de réception ($11_1$, $12_1$ à $11_N$, $12_N$), des moyens pour mettre en forme N signaux reçus par les moyens de réception sous forme de N signaux numériques de symboles ($X_1$ à $X_N$), N étant un entier supérieur à 1, et un moyen de corrélation Doppler-distance (7) pour discriminer des cibles mobiles, **caractérisé en ce qu'**il comprend moyen (81) pour estimer un vecteur directionnel ($V_{TD}$) du trajet direct à N composantes dans un repère à N dimensions, un moyen (82) pour construire une base orthonormée dans le repère à N dimensions composée du vecteur de trajet direct ($V_{TD} = U_1$) et de N-1 vecteurs directionnels ($U_2$ à UN) orthogonaux entre eux et au vecteur directionnel ($V_{TD}$)

du trajet direct réel, et un moyen (83) pour générer N-1 signaux fictifs ($SF_2$ à $SF_N$) qui sont analogues à un signal de référence (SR) représentatif de signaux parasites à effet Doppler nul (TD) dans les N signaux de symboles reçus ($X_1$ à $X_N$), en fonction des produits du signal de référence (SR) par des coefficients angulaires dépendant des directions de N-1 vecteurs orthogonaux et de coefficients de retard par rapport au trajet direct réel dépendant des produits de multiples entiers différents de l'inverse de la largeur de bande des porteuses, un moyen (9) pour additionner chaque signal de symboles reçu ($X_1$ à $X_N$) aux N-1 signaux fictifs ($SF_2$ à $SF_N$) afin de produire des signaux reçus modifiés ($SPM_1$ à $SPM_N$), et un moyen de filtrage (3) pour éliminer dans les signaux reçus modifiés les signaux parasites à effet Doppler nul (TD) afin d'appliquer des signaux de symboles filtrés ($x'_1$ à $x'_N$) contenant essentiellement des signaux rétrodiffusés (SC) par des cibles (CB) au moyen de corrélation (7).

2. Récepteur radar conforme à la revendication 1, dans lequel le moyen (81) pour estimer est apte à estimer le vecteur directionnel ($V_{TD}$) du trajet direct en fonction de matrices de covariance d'ordre N dépendant chacune de produits de raies spectrales ($SP_{k1}$ à $SP_{kN}$) des signaux de symboles reçus ($x_1$ à $x_N$) deux à deux dans un groupe relatif à une porteuse respective ($f_k$).

3. Récepteur radar conforme à la revendication 1 ou 2, comprenant un moyen (5) pour estimer les coefficients de la fonction de transfert du canal de propagation (EM-RE) en fonction des raies spectrales ($SP_{11}$ à $SP_{K1}$) de l'un ($X_1$) des signaux de symboles reçus pour chaque symbole et moyenner les coefficients de la fonction de transfert sur chaque trame afin de produire les raies spectrales ($SR_1$ à $SR_K$) du signal de référence.

4. Récepteur radar conforme aux revendications 2 et 3, comprenant un moyen (5) pour corriger les raies spectrales ($SR_1$ à $SR_K$) du signal de référence en fonction de la direction d'une cible par rapport au vecteur directionnel de trajet direct estimé.

5. Récepteur radar conforme à la revendication 3 ou 4, comprenant un moyen (6) pour estimer une réplique de signal émis (Re) en fonction des raies spectrales ($SR_1$ à $SR_K$) du signal de référence, la réplique estimée étant corrélée aux signaux de symboles filtrés ($x'_1$ à $x'_N$) dans le moyen de corrélation Doppler-distance (7).

6. Récepteur radar conforme à l'une quelconque des revendications 1 à 5, **caractérisé en ce que** le moyen de filtrage (3) comprend un moyen (31) pour estimer des matrices de covariance d'ordre N dépendant chacune de produits des raies spectrales ($SP_{k1}$ à $SP_{kN}$) des signaux reçus modifiés ($SPM_1$ à $SPM_N$) deux à deux dans un groupe relatif à une porteuse respective ($f_k$), un moyen (32) pour déduire des matrices inverses des matrices de covariance, et un moyen (33) pour filtrer les groupes de raies spectrales relatifs respectivement aux porteuses ($f_1$- $f_K$) dans les signaux reçus modifiés en multipliant les groupes de raies par les matrices inverses respectives afin de produire des groupes filtrés de raies spectrales, et **en ce que** le récepteur radar comprend en outre un moyen (4) pour synthétiser les groupes filtrés de raies spectrales en des signaux de symboles filtrés ($x'_1$ à $x'_N$) contenant essentiellement des signaux rétrodiffusés par des cibles (CB) appliqués au moyen de corrélation (7).

7. Récepteur radar conforme à la revendication 2 ou 6, dans lequel les produits de raies spectrales dont dépendent les matrices de covariances dépendent de raies spectrales de symboles et sont moyennés sur chaque trame.

**Claims**

1. A radar receiver processing a radio signal received through a propagation channel (EM-RE) and comprising frames of symbols each emitted on coded orthogonal carriers ($f_1$ - $f_K$), comprising N reception means ($11_1$, $12_1$ to $11_N$, $12_N$), means for shaping N signals received by the reception means into N digital symbol signals ($X_1$ to $X_N$), N being an integer more than 1, and Doppler-distance correlation means (7) for discriminating mobile targets, **characterized in that** it comprises means (81) for estimating a direct path directional vector ($V_{TD}$) with N components in an N-dimensional frame of reference, means (82) for constructing an orthonomic base in the N-dimensional frame of reference made up of the direct path vector ($V_{TD}$ = $U_1$) and N-1 directional vectors ($U_2$ to $U_N$) orthogonal to each other and to the direct path directional vector ($V_{TD}$), and means (83) for generating N-1 dummy signals ($SF_2$ to $SF_N$) that are analogous to a reference signal (SR) representative of unwanted zero Doppler effect signals (TD) in the N received symbol signals ($X_1$ to $X_N$), as a function of the product of the reference signal (SR) and angular coefficients depending on the directions of the N-1 orthogonal vectors and time-delay coefficients relative to the real direct path depending on products of the different integer multiples by the reciprocal of the bandwidth of the carriers, means (9) for adding each received symbol signal ($X_1$ to $X_N$) to the N-1 dummy signals ($SF_2$ to $SF_N$) to produce modified received signals ($SPM_1$ to $SPM_N$), and filtering means (3) for eliminating unwanted zero Doppler effect signals (TD) in the modified received signals in order to apply filtered symbol signals ($X'_1$ to $X'_N$) including essentially signals (SC) backscattered by targets (CB) to the correlation means (7).

2. A radar receiver according to claim 1, wherein the estimating means (81) is adapted to estimate the direct path directional vector ($V_{TD}$) as a function of $N^{th}$ order covariance matrices each dependent on products of spectral lines ($SP_{k1}$ to $SP_{kN}$) of the received symbol signals ($X_1$ to $X_N$) two by two in a group relating to a respective carrier ($f_k$).

3. A radar receiver according to claim 1 or 2, comprising means (5) for estimating the coefficients of the transfer function of the propagation channel (EM-RE) as a function of the spectral lines ($SP_{11}$ to $SP_{K1}$) of one ($X_1$) of the received symbol signals for each symbol and averaging the coefficients of the transfer function over each frame in order to produce the spectral lines ($SR_1$ to $SR_K$) of the reference signal.

4. A radar receiver according to claims 2 and 3, comprising means (5) for correcting the spectral lines ($SR_1$ to $SR_K$) of the reference signal as a function of the direction of a target relative to the estimated direct path directional vector.

5. A radar receiver according to claim 3 or 4, comprising means (6) for estimating an emitted signal replica (Re) as a function of the spectral lines ($SR_1$ to $SR_K$) of the reference signal (TD), the estimated replica being correlated to the filtered symbol signals ($X'_1$ to $X'_N$) in the Doppler-distance correlation means (7).

6. A radar receiver according to any one of claims 1 to 5, **characterized in that** the filtering means (3) comprises means (31) for estimating $N^{th}$ order covariance matrices each depending on products of the spectral lines ($SP_{k1}$ to $SP_{kN}$) of the modified received signals ($SPM_1$ to $SPM_N$) two by two in a group relating to a respective carrier ($f_k$), means (32) for deducing inverse matrices of the covariance matrices, and means (33) for filtering the groups of spectral lines respectively relating to the carriers ($f_1 - f_K$) in the modified received signals by multiplying the groups of lines by the respective inverse matrices to produce filtered groups of spectral lines, and **in that** the radar receiver further comprises means (4) for synthesizing the filtered groups of spectral lines into filtered symbol signals ($X'_1$ to $X'_N$) including essentially signals backscattered by targets (CB) applied to the correlation means (7).

7. A radar receiver according to claim 2 or 6, wherein the spectral line products on which the covariance matrices are dependent depend on spectral lines of symbols and are averaged over each frame.

**Patentansprüche**

1. Radarempfänger, der ein Funksignal verarbeitet, das über einen Ausbreitungskanal (EM-RE) empfangen wird und aus Symbolrahmen besteht, die jeweils auf codierten orthogonalen Trägerwellen ($f_1$ bis $f_K$) gesendet werden, umfassend N Empfangsmittel ($11_1$, $12_1$ bis $11_N$, $12_N$), Mittel zum Formen von N Signalen, die von den Empfangsmitteln als N digitale Symbolsignale ($X_1$ bis $X_N$) empfangen werden, wobei N eine Ganzzahl größer als 1 ist, und ein Mittel zur Doppler/Distanz-Korrelation (7), um Bewegtziele zu unterscheiden, **dadurch gekennzeichnet, dass** er ein Mittel (81) zum Schätzen eines Richtungsvektors ($V_{TD}$) des direkten Pfades mit N Komponenten an einer Markierung mit N Dimensionen, ein Mittel (82) zum Bilden einer orthonormierten Basis an der Markierung mit N Dimensionen, die aus dem Direktpfadvektor ($V_{TD} = U_1$) und aus N-1 Richtungsvektoren ($U_2$ bis $U_N$), die zueinander und zu dem Richtungsvektor ($V_{TD}$) des tatsächlichen Direktpfades orthogonal sind, besteht, und ein Mittel (83) zum Erzeugen von N-1 fiktiven Signalen ($SF_2$ bis $SF_N$), die einem Referenzsignal (SR), das Störsignale mit einem Null-Dopplereffekt (TD) in den N empfangenen Symbolsignalen ($X_1$ bis $X_N$) darstellt, entsprechen, in Abhängigkeit von den Produkten des Referenzsignals (SR) mit Winkelkoeffizienten, die von den Richtungen von N-1 orthogonalen Vektoren und Verzögerungskoeffizienten im Verhältnis zu dem tatsächlichen Direktpfad abhängen, der von den ganzzahligen vielfachen Produkten, die sich vom Kehrwert der Bandbreite der Trägerwellen unterscheiden, abhängig ist, ein Mittel (9) zum Addieren jedes empfangenen Symbolsignals ($X_1$ bis $X_N$) zu den N-1 fiktiven Signalen ($SF_2$ bis $SF_N$), um modifizierte empfangene Signale zu ergeben ($SPM_1$ bis $SPM_N$), und ein Filtermittel (3), um aus den modifizierten empfangenen Signalen die Störsignale mit Null-Dopplereffekt (TD) zu entfernen, um gefilterte Symbolsignale ($X'_1$ bis $X'_N$) anzuwenden, die im Wesentlichen Signale (SC) umfassen, die von den Zielen (CB) mittels einer Korrelation (7) rückgestreut werden, umfasst.

2. Radarempfänger nach Anspruch 1, wobei das Schätzungsmittel (81) dazu geeignet ist, den Richtungsvektor ($V_{TD}$) des direkten Pfades in Abhängigkeit von Kovarianzmatrizen N. Ordnung zu schätzen, die jeweils von Produkten von Spektrallinien ($SP_{k1}$ bis $SP_{kN}$) der jeweils paarweise empfangenen Symbolsignale ($X_1$ bis $X_N$) in einer Gruppe bezüglich einer jeweiligen Trägerwelle ($f_k$) abhängig sind.

3. Radarempfänger nach Anspruch 1 oder 2, umfassend ein Mittel (5) zum Schätzen der Koeffizienten der Übertragungsfunktion des Ausbreitungskanals (EM-RE) in Abhängigkeit von den Spektrallinien ($SP_{11}$ bis $SP_{K1}$) eines ($X_1$) der Symbolsignale, die für jedes Symbol empfangen werden, und zum Mittelwertbilden der Koeffizienten der Übertragungsfunktion über jeden Rahmen, um die Spektrallinien ($SR_1$ bis $SR_K$) des Referenzsignals zu ergeben.

4. Radarempfänger nach Anspruch 2 und 3, umfassend ein Mittel (5) zum Korrigieren der Spektrallinien ($SR_1$ bis $SR_K$) des Referenzsignals in Abhängigkeit von der Richtung eines Ziels im Verhältnis zum Richtungsvektor des geschätzten direkten Pfades.

5. Radarempfänger nach Anspruch 3 oder 4, umfassend ein Mittel (6) zum Schätzen einer Nachbildung eines gesendeten Signals (Re) in Abhängigkeit von den Spektrallinien ($SR_1$ bis $SR_K$) des Referenzsignals, wobei die geschätzte Nachbildung mit den gefilterten Symbolsignalen ($X'_1$ bis $X'_N$) in dem Doppler/Distanz-Korrelationsmittel (7) korreliert wird.

6. Radarempfänger nach einem der Ansprüche 1 bis 5, **dadurch gekennzeichnet, dass** das Filtermittel (3) ein Mittel (31), um Kovarianzmatrizen N. Ordnung zu schätzen, die jeweils von Produkten der Spektrallinien ($SP_{k1}$ bis $SP_{kN}$) der modifizierten empfangenen Signale ($SPM_1$ bis $SPM_N$) paarweise in einer Gruppe bezüglich einer jeweiligen Trägerwelle ($f_k$) abhängig sind, ein Mittel (32), um von den umgekehrten Matrizen Kovarianzmatrizen abzuziehen, und ein Mittel (33) zum Filtern der Gruppen von Spektrallinien, die sich jeweils auf die Trägerwellen ($f_1$ bis $f_K$) in den modifizierten empfangenen Signalen beziehen, indem die Liniengruppen mit den jeweiligen umgekehrten Matrizen multipliziert werden, um gefilterte Gruppen von Spektrallinien zu ergeben, umfasst, und dass der Radarempfänger ferner ein Mittel (4) umfasst, um die gefilterten Gruppen von Spektrallinien in gefilterte Symbolsignale ($X'_1$ bis $X'_N$) zu synthetisieren, die im Wesentlichen Signale enthalten, die von Zielen (CB) rückgestreut werden, die auf das Korrelationsmittel (7) angewendet werden.

7. Radarempfänger nach Anspruch 2 oder 6, wobei die Produkte von Spektrallinien, von denen die Kovarianzmatrizen abhängen, von Symbolspektrallinien abhängen und über jeden Rahmen gemittelt sind.

## Fig. 1

$$T'_s \qquad T'_s$$

$$\Delta \qquad T_s \qquad \Delta \qquad T_s$$

$$S_i \qquad S_{i+1}$$

$$S_{i-1}$$

$$\sum_{k=1}^{k=K} C_{k,i}\, e^{j2\pi kt/T_s} \qquad \sum_{k=1}^{k=K} C_{k,i+1}\, e^{j2\pi kt/T_s}$$

## Fig. 2

trame

"nul" $F_0$

$S$

$S_2$
$f_1 - f_K$
prédéterminés

$S_3$
codé

$S_i$
codé

$S_I$
codé

## Fig. 3

EM (COFDM)

RF

trajet
direct

CB

trajets
multiples

0

SC(t)

TD(t)

RE

## Fig. 4

trajet
direct

−83dB

Lobes secondaires
du trajet direct

−135dB

Fouillis
−133dB

−185dB

Lobes secondaires
du fouillis

−186dB

−198dB

Bruit Thermique

EP 1 476 768 B1

# Fig. 5

15

# Fig. 6

EM

brouilleurs
B(t)

Signaux OFDM
TD(t)

SA

RE

## <u>Fig. 7</u>

$X_n(t)$ de 14

$X_N(t)$ —————— $X_1(t)$

```
ANALYSEUR
FFT
```
~ 2

SP$_{11}$ à SP$_{K1}$

SP$_{1n}$ à SP$_{Kn}$

SP$_{1N}$ à SP$_{KN}$

SP$_{11}$ à SP$_{K1}$

81 —
```
Estimateur
de vecteur
directionnel
de trajet direct
```

8 ↘

$V_{TD} = U_1$

5

```
DETECTEUR
SIGNAUX
CORRELES
```

82 —
```
Constructeur
de base
orthonormée
```
$U_2$

$U_{N-1}$ $U_n$

83 —
```
Générateur de
N−1 signaux
fictifs retardés
en 1/B
```

$SR_1$ à $SR_K$

Vers 6

9

```
ADDITION
DES SIGNAUX
RECUS REELS AUX
SIGNAUX FICTIFS
```

SF$_{12}$ à SF$_{K2}$ = SF$_2$

SF$_{1n}$ à SF$_{Kn}$ = SF$_n$

SF$_{1N}$ à SF$_{KN}$ = SF$_N$

SPM$_{11}$ à SPM$_{K1}$

SPM$_{1N}$ à SPM$_{KN}$

$$SPM_{1n} = SP_{1n} + \sum_{n=2}^{n=N} SF_{1n}, \ldots$$

$$SPM_{kn} = SP_{kn} + \sum_{n=2}^{n=N} SF_{kn}, \ldots$$

$$SPM_{Kn} = SP_{Kn} + \sum_{n=2}^{n=N} SF_{Kn}$$

31 —
```
Calcul
R₁ à R_K
```

Vers 32   Vers 33

**Fig. 8**

**Fig. 9**

**EP 1 476 768 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2776438

- FR 2820507